**Europäisches Patentamt**

**European Patent Office**

**Office européen des brevets**

(19)

(11) Veröffentlichungsnummer : **0 280 027 B1**

# EUROPÄISCHE PATENTSCHRIFT

(12)

(45) Veröffentlichungstag der Patentschrift :
**03.04.91 Patentblatt 91/14**

(51) Int. Cl.$^5$ : **C01B 17/88, B01D 1/00, B01D 1/30**

(21) Anmeldenummer : **88100643.1**

(22) Anmeldetag : **19.01.88**

(54) **Pauling-Kessel sowie Verfahren zum Aufkonzentrieren von Schwefelsäure.**

(30) Priorität : **29.01.87 DE 3702541**

(43) Veröffentlichungstag der Anmeldung :
**31.08.88 Patentblatt 88/35**

(45) Bekanntmachung des Hinweises auf die
Patenterteilung :
**03.04.91 Patentblatt 91/14**

(84) Benannte Vertragsstaaten :
**BE DE ES FR GB IT NL**

(56) Entgegenhaltungen :
**EP-A- 0 037 508**
**DE-A- 3 208 980**
**DE-C- 299 774**

(73) Patentinhaber : **BAYER AG**
**W-5090 Leverkusen 1 Bayerwerk (DE)**

(72) Erfinder : **Beckhaus, Heiko, Dr.**
**Winterberg 17**
**W-5090 Leverkusen 3 (DE)**
Erfinder : **Witt, Harro, Dr.**
**Mühlenbarg 2**
**W-2224 Kuden (DE)**
Erfinder : **Klein, Peter**
**Geschwister-Scholl-Allee 183**
**W-2210 Itzehoe (DE)**

## Beschreibung

Die vorliegende Erfindung betrifft verbesserte Pauling-Kessel zum Aufkonzentrieren von Schwefelsäure sowie ein Verfahren zum Aufkonzentrieren von Schwefelsäure in diesen verbesserten Pauling-Kesseln.

Abfallschwefelsäuren werden häufig in Grauguß-Kesseln, sogenannten Pauling-Kesseln aufkonzentriert und somit regeneriert. Dieses Verfahren ist Gegenstand der DE-C 299 774. Dabei wird die etwa 70%ige Abfallschwefelsäure einer Abtriebskolonne zugeführt, die auf einen als Destillationsblase dienenden Kessel aus grauem Gußeisen montiert ist. Der mit Gas oder Mineralöl befeuerte Kessel ist mit siedender, konzentrierter Schwefelsäure gefüllt, die entsprechend dem Zufluß abgezogen und gekühlt wird. Das in der Abfallschwefelsäure enthaltene Wasser verläßt die Abtriebskolonne als 120°C bis 175°C heißer Dampf.

Die Pauling-Kessel sind innen der Korrosion durch die heiße, konzentrierte Schwefelsäure ausgesetzt. Besonders kritisch ist jedoch die Korrosion von außen im Feuerungsraum. Der Graugußkessel verzundert mehr oder weniger je nach Temperaturbelastung und -verteilung im Feuerungsraum. Die Oberflächenverzunderungen bilden sich besonders bei hohen Auslastungen oder schlechten Wärmeübergängen durch Eisensulfatverschlammungen auf der Kesselinnenwand. Der Wirkungsgrad des Wärmeüberganges von den heißen Rauchgasen zur siedenden Schwefelsäure wird schlechter und erfordert mehr Einsatz an Primärenergie. Eine Zunderschicht ist gleichzeitig eine gute Isolierschicht. Platzt partiell eine verzunderte Oberschicht ab, so entstehen thermische Spannungen im Gußgefüge, so daß sich unerwünschte Risse bilden können.

Durch Temperaturwechsel – bedingt durch An- und Abfahrvorgänge – und Eindiffusion von heißen Rauchgasen können weitere Umfangs-Zugspannungen Risse vertiefen und an der Oberfläche sichtbar machen. Nachteilig ist, daß solche Gefügeänderungen und auf Dauer unvermeidliche Rißbildungen nur im kalten Zustand untersucht werden können. Die Gefahr eines Kesseldurchbruchs ist nach längerem Betreiben nicht auszuschließen.

Verzunderungen ließen sich durch geringe Oberflächentemperaturen zwar vermindern, die Produktionskapazität ginge dann jedoch zurück und das Verfahren würde unwirtschaftlich.

Die Aufgabe der vorliegenden Erfindung besteht demnach darin, Pauling-Kessel bereitzustellen, die die beschriebenen Nachteile nicht aufweisen.

Überraschenderweise wurde nun gefunden, daß diese Anforderungen in hervorragender Weise von Pauling-Kesseln erfüllt werden, die eine Außenbeschichtung mit Aluminium aufweisen.

Gegenstand der Erfindung sind somit Pauling-Kessel zum Aufkonzentrieren von Schwefelsäure, welche dadurch gekennzeichnet sind, daß die äußere Oberfläche der Pauling-Kessel mit Aluminium beschichtet ist.

Die Aluminium-Beschichtung der zu beschichtenden Pauling-Kessel kann nach bekannten Metallspritzverfahren vorgenommen werden, wobei das Aluminium aus kurzer Entfernung auf die Kesseloberfläche geschossen wird, indem das Metall durch eine Äthinsauerstoffflamme abgeschmolzen und auf ca. 200 m/s beschleunigt wird.

Das Aluminium dringt dabei teilweise in die freigesetzten Korngrenzen an der Gußoberfläche ein. Es entsteht eine Aluminium-Schicht von 0,5 bis 0,7 mm Dicke.

Für die erfindungsgemäßen Pauling-Kessel soll die Dicke der Aluminiumbeschichtung 0,2 bis 2 mm betragen. Die erfindungsgemäße Aluminiumbeschichtung kann sowohl an neuen als auch schon betriebenen Pauling-Kesseln vorgenommen werden. Der Grauguß sollte aber unmittelbar vorher mit geeignetem Strahlgut unter Druck gestrahlt werden.

Das zur erfindungsgemäßen Beschichtung eingesetzte Aluminium sollte eine Reinheit von 50 bis 99,99% aufweisen.

Während des Anheizens bei der Anfahrt des Pauling-Kessels schmilzt die Aluminiumschicht an, wobei auch Al-Tropfen abfallen können. Bei sachgemäßer Verweilzeit bei Temperaturen von ca. 100 bis 650°C verbleibt eine dichte, in das perlitische Gußgefüge eingelagerte Oxidhaut, die einen verbesserten Wärmeübergang von den heißen Rauchgasen in die Schwefelsäure gewährleistet. Vorteilhaft ist ferner, daß aufgrund der geschlossenen dünnen Aluminiumoxidschicht keine Entkohlung, Verzunderung und Gefügeveränderung der Gußoberfläche eintritt. Eine Spannungsrißkorrosion und damit die Gefahr eines Kesseldurchbruches von der Rauchgasseite her ist minimiert.

Gegenstand der vorliegenden Erfindung ist auch ein Verfahren zum Aufkonzentrieren von Schwefelsäure in Pauling-Kesseln durch Unterfeuerung mit Gas oder flüssigen Brennstoffen, dadurch gekennzeichnet, daß das Aufkonzentrieren in den erfindungsgemäßen Pauling-Kesseln durchgeführt wird.

Hierbei ergibt sich auch der verfahrenstechnische Vorteil, daß durch den verbesserten Wirkungsgrad des Wärmeübergangs die Rauchgastemperaturen erhöht werden können. Die Heizleistung wird um ca. 20% über die sonst zulässige maximale Dauerlast erhöht.

Eine besonders bevorzugte Ausführungsform des erfindungsgemäßen Verfahrens besteht darin, daß die Unterfeuerung der Pauling-Kessel mit Rauchgasen geschieht, die einen Sauerstoffüberschuß, bevorzugt zwischen 2 und 5 Vol.-%, aufweisen. Der von den Kessellieferanten vorgeschriebene Luftüberschuß von 20 Vol.-% im Rauchgas wird somit drastisch abgesenkt. Damit vermindern sich gleichzeitig die $NO_x$-Werte im Rauchgas, so daß keine weitere Maßnahmen zur Entstickung der Rauchgase nötig sind. Die Einsparung an Primärenergie kann auf ca. 20% beziffert werden.

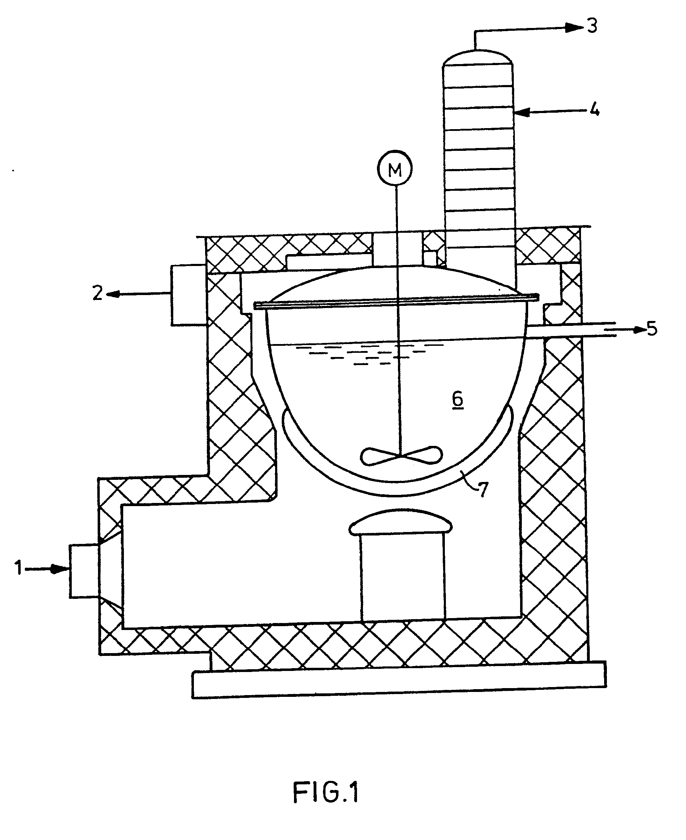

Fig. 1 zeigt beispielhaft den Aufbau einer Aufkonzentriereinheit von gebrauchter Schwefelsäure.

Für das Betreiben eines erfindungsgemäßen Pauling-Kessels sind die bezifferten Parameter von Bedeutung :

1. Heizmittelunterfeuerung
2. Rauchgase
3. abgetriebener Wasserdampf
4. Aufgabe gebrauchter Schwefelsäure
5. hergestellte konzentrierte Schwefelsäure
6. siedende konzentrierte Schwefelsäure
7. Aluminiumbeschichtung.

Im folgenden wird die Erfindung beispielhaft erläutert, ohne daß hierin eine Einschränkung zu sehen ist.

### Beispiel 1 (Vergleichsbeispiel)

Aufkonzentrierung von Schwefelsäure ohne Beschichtung

Bei der Erdgasmenge (1) von 200 m³/h konnten 5.340 kg/h einer 76%igen gebrauchten Schwefelsäure (4) aufgegeben werden, um 4.230 kg/h 96%ige Schwefelsäure (5) zu produzieren. Entsprechend wurden 1.110 kg/h Wasserdampf (3) bei Temperaturen von 120 bis 170°C abgetrieben. Im Rauchgasstrom (2) waren bei 10 bis 12 Vol.-% $O_2$ ca. 400 ppm $NO_x$-Gase enthalten.

### Beispiel 2

Aufkonzentrieren von Schwefelsäure mit Aluminiumbeschichtung

Bei einer Erdgasmenge (1) von 180 m³/h konnten 5.520 kg/h einer 76%igen gebrauchten Schwefelsäure (4) augegeben werden, um 4.370 kg/h 96%ige Schwefelsäure (5) zu produzieren. Entsprechend wurden 1.150 kg/h Wasserdampf (3) bei Temperaturen von 120 bis 170°C abgetrieben. Im Rauchgasstrom (2) waren bei 2 bis 5 Vol.-% $O_2$ ca. 100 bis 170 ppm $NO_x$-Gase enthalten.

### Ansprüche

1. Pauling-Kessel zum Aufkonzentrieren von Schwefelsäure, dadurch gekennzeichnet, daß die äußere Oberfläche der Pauling-Kessel mit Aluminium beschichtet ist.

2. Pauling-Kessel gemäß Anspruch 1, dadurch gekennzeichnet, daß die Dicke der Aluminiumbeschichtung 0,2 bis 2 mm beträgt.

3. Pauling-Kessel gemäß einem der Ansprüche 1 oder 2, dadurch gekennzeichnet, daß das Aluminium eine Reinheit von 50 bis 99.99% aufweist.

4. Verfahren zum Aufkonzentrieren von Schwefelsäure in Pauling-Kesseln durch Unterfeuerung mit Gas oder flüssigen Brennstoffen, dadurch gekennzeichnet, daß das Aufkonzentrieren in Pauling-Kesseln gemäß einem oder mehrere der Ansprüche 1 bis 2 durchgeführt wird.

5. Verfahren gemäß Anspruch 4, dadurch gekennzeichnet, daß die Unterfeuerung mit Rauchgasen geschieht, die einen Sauerstoffüberschuß, bevorzugt zwischen 2 und 5 Vol.-%, aufweisen.

### Claims

1. Pauling pot for the concentration of sulphuric acid, characterized in that the outer surface of the Pauling pot is coated with aluminium.

2. Pauling pot according to Claim 1, characterized in that the thickness of the aluminium coating is 0.2 to 2 mm.

3. Pauling pot according to one of Claims 1 or 2, characterized in that the aluminium has a purity of 50 to 99.99%.

4. Process for the concentration of sulphuric acid in Pauling pots by firing from below with gas or liquid fuels, characterized in that the concentration in Pauling pots is carried out according to one or more of Claims 1 to 2.

5. Process according to Claim 4, characterized in that the firing from below is carried out with flue gases which have an excess of oxygen, preferably between 2 and 5 vol.%.

### Revendications

1. Chaudière de Pauling pour la concentration d'acide sulfurique, caractérisée en ce que sa surface externe est revêtue d'aluminium.

2. Chaudière de Pauling selon la revendication 1, caractérisée en ce que l'épaisseur du revêtement d'aluminium est de 0,2 à 2 mm.

3. Chaudière de Pauling suivant l'une des revendications 1 et 2, caractérisée en ce que l'aluminium présente une pureté de 50 à 99,99%.

4. Procédé de concentration d'acide sulfurique dans des chaudières de Pauling par alimentation du foyer inférieur avec du gaz ou des combustibles liquides, caractérisé en ce que la concentration est effectuée dans des chaudières de Pauling suivant une ou plusieurs des revendications 1 et 2.

5. Procédé suivant la revendication 4, caractérisé en ce que l'alimentation du foyer inférieur est effectuée avec des gaz de fumée qui présentent un excès d'oxygène, de préférence de 2 à 5% en volume.

FIG.1